# EUROPEAN PATENT SPECIFICATION

(11) **EP 1 492 297 B1**
(45) Date of publication and mention of the grant of the patent: **02.11.2006**
(21) Application number: 03291588.6
(22) Date of filing: 27.06.2003
(51) Int. Cl.: H04L 29/06, H04M 7/00

(54) **Communication system and method providing IP facilities to a stimuli terminal**
Kommunikationssystem und Verfahren zum Bereitstellen von IP-Möglichkeiten an einem Stimuliendgerät
Système et procédé de communication pour fournir des possibilités IP à un terminal de type stimuli

(43) Date of publication of application: 29.12.2004
(73) Proprietor: ALCATEL, 75008 Paris (FR)
(72) Inventor: Gass, Raymond, 67150 Bolsenheim (FR); Pinier, François, 67100 Strasbourg (FR)
(74) Representative: Rausch, Gabriele

(56) References cited:
- WO-A-03/040942
- US-A1- 2003 002 478

## Description

The present invention is related to the field of the telecommunications, in particular the communications established from a telecommunication terminal and over a gateway controller.

The present invention concerns more specifically a communication system, a media gateway controller and a method for establishing a communication, allowing a stimuli telecommunication terminal to access Internet facilities.

It is known that the ITU-T H.248 / IETF Megaco communication protocol, amongst other profiles, describes a stimulus protocol between a master unit (media gateway controller) and a slave unit (media gateway) which is remotely controlled by the master unit.

This general concept covers mainly two types of media gateways : IP PBXs (Internet Protocol Private Branch Exchanges) and IP terminal sets.

The current definition of H.248 protocol takes into account several packages for remotely handling various applications like tone generator and detector, DTMF generator and detector, analog line supervisor, facsimile transmission, keyboard, keypad, screen display, SCTP session, ATM transport, and so on.

When considering the implications at terminal level, it can be noticed that full stimuli terminals are completely dumb, and fully remotely controlled (in the above case by the media gateway controller) for any elementary operation (off hook, set up loudpseaker, etc.)

One must admit that this solution has at least two major advantages:
- it is economic (low cost terminal: intelligence in the system shared by several terminals)
- easy evolution (scenarios may change in the system without any impact on the terminal).

But this proposal is only valid as long as the time interval, at the considered terminal, between event (for example off hook) and action (for example tone) remains short enough.

However, with LAN based systems, involving VoIP technology, latency between media gateway controller and terminal might be too long, in particular in a WAN configuration, and generate potential QoS (Quality of Service) problems.

Moreover, the current release of H.248 protocol does not support the handling of a HTTP session and therefore completely inhibits capabilities and features such as download of files (e.g. sound file, compressed digital photography, video stream file) or any applet inside a H.248 terminal. For example, the download of a ringing melody in a H.248 terminal from a Web server through a simple browser using HTTP communication protocol (e.g. Netscape or Internet Explorer) is considered as being a very pleasant and common feature, as such feature is already available for cellular phones.

It is a major aim of the invention to overcome the aforementioned limitations.

Therefore, the present invention concerns a communication system according to claim 1, comprising a media gateway controller and at least one stimuli telecommunication terminal connected to it and acting as a media gateway, wherein said terminal is remotely controlled by said controller, characterised in that a gateway function able to support an Internet Transfer Protocol is provided within or associated to said controller.

The present invention also concerns a communication method according to claims 2 and 3.

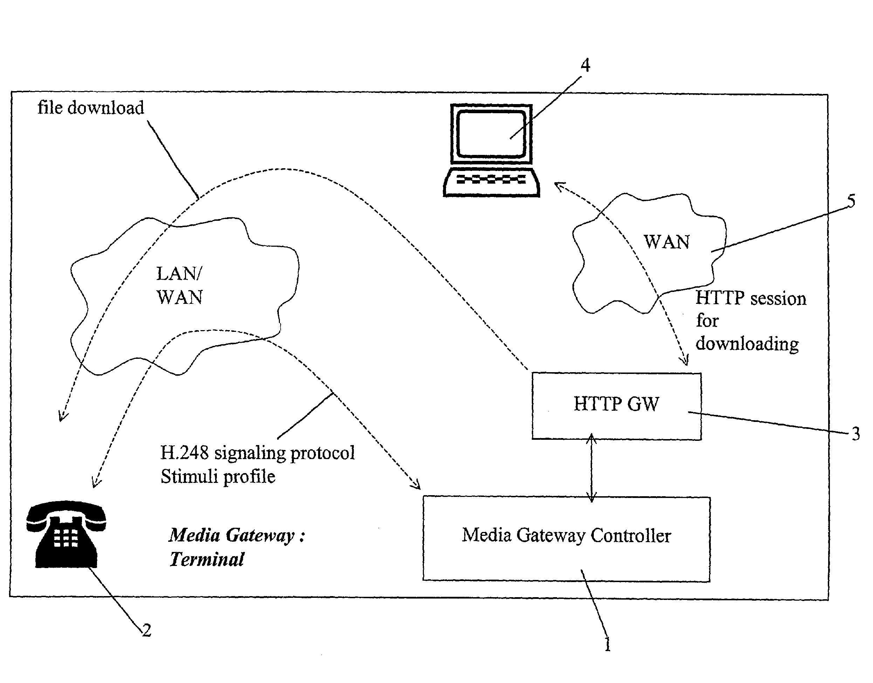

The present invention will be better understood thanks to the following description of additional features and advantages, and will now be described in more details, by way of example, in relation to a non limitative embodiment shown on the enclosed drawing, wherein the sole figure is a schematical representation of a communication system of the invention.

As shown, the communication system comprises a media gateway controller 1 and at least one stimuli telecommunication terminal 2 connected to it and acting as a media gateway, wherein said terminal 2 is remotely controlled by said controller 1.

According to the main feature of the invention, a gateway function 3 able to support an Internet Transfer Protocol is provided within or associated to said controller 1.

Preferably, but not restrictively, said Internet Transfer Protocol comprises Hypertext Transfer Protocol (HTTP) and the communication link between the controller 1 and the or each of the terminal(s) 2 is based on the H.248 protocol.

As it is noticeable on the enclosed drawing, the gateway function 3 is able to handle HTTP sessions based on trigger signals from the terminal 2, display signals towards the terminal 2 and file downloading.

Advantageously, the trigger signals are in the form of H.248 stimuli and the display signals are in the form of extensible markup language (XML).

The present invention also encompasses a media gateway controller 1 connected to at least one stimuli terminal, said controller 1 realising a remote control of said terminal(s) by means of a stimulus protocol.

According to the invention, said controller 1 comprises or is associated with a gateway function 3, having the ability to support an Internet Transfer Protocol.

Preferably of course, said controller 1 will be part of a communication system as described before.

Furthermore, another subject matter of the present invention consists in a telecommunication terminal based on a stimuli telecommunication terminal, and comprising means for connection to a media gateway controller, characterised in that it also comprises means for connection to an Internet Transfer Protocol based gateway 3.

Preferably, said telecommunication terminal 2 will be part of a communication system as described before and connectable to an aforementioned media gateway controller 1.

Thus, in comparison to full stimuli telecommunication terminals, the invention proposes a solution corresponding to a considered evolution of the latters, but which still shows the two advantages set forth in the introducing part, without the mentioned limitation.

Instead of completely passive terminals, the invention proposes an intermediate solution, whereby some simple decisions can be taken at terminal level to avoid having to wait for event / action messages to be exchanged between the terminal 2 and the media gateway controller 1.

In particular, the invention can provide that the off hook / tone sequence is handled directly by the terminal 2 itself and that, with tones generated inside the terminals means in the form of a HTTP gateway offers the possibility to download melodies for ringing / tones.

Finally, the present invention is also concerned with a method for establishing a communication between a stimuli telecommunication terminal 2 connected to and controlled by a media gateway controller 1, on the one hand, and a distant terminal or server 4, on the other hand, over at least a wide area network 5.

Said method is characterised in that it comprises the steps of performing a remote operation directly generated by or acting on said terminal 2 by means of a gateway function 3 able to support an Internet Transfer Protocol, said gateway function 3 being provided within or associated to said controller 1.

Said method may be advantageously carried out on a communication system as mentioned herein previously and shown on the enclosed drawing.

## Claims

1. Communication system comprising a media gateway controller (1) and at least one stimuli telecommunication terminal (2) connected to it and acting s a media gateway, wherein said at least one stimuli telecommunication terminal is remotely controlled by said media gateway controller (1) and the communication link between said media gateway controller (1) and said at least one stimuli telecommunication terminal (2) is based on the ITU-T H.248 / IETF Megaco protocol, system **characterised in that** a gateway function (3) is provided within or associated to said media gateway controller (1), said gateway function (3) being adapted to handle HTTP sessions based on trigger signals in the form of H.248 stimuli from said at least one stimuli telecommunication terminal (2), XML display signals towards said at least one stimuli telecommunication terminal (2) and file downloading into said at least one stimuli telecommunication terminal (2) from a distant terminal or server (4).

2. Method for establishing a communication between a stimuli telecommunication terminal connected to and controlled by a media gateway controller (1) on the one hand, and a distant terminal or server (4), on the other hand, over at least a wide area network, the communication link between said media gateway controller and said stimuli telecommunication terminal being based on the ITU-T said stimuli telecommunication H.248 / IETF Megaco protocol, method **characterised in that** it comprises the steps of performing a remote operation directly generated by or acting on said stimuli telecommunication terminal (2), in particular downloading of files into said stimuli telecommunication terminal (2) from said distant terminal or server (4), by means of a gateway function (3) adapted to support Hypertext Transfer Protocol, said gateway function (3) being provided within or associated to said media gateway controller (1) and adapted to handle HTTP sessions based on trigger signals in the form of H.248 stimuli from said stimuli telecommunication terminal (2), XML display signals towards said stimuli telecommunication terminal (2) and file downloading into said stimuli telecommunication terminal (2) from said distant terminal or server (4).

3. Method according to claim 2, **characterised in that** it is carried out on a system according to claim 1.

## Patentansprüche

1. Kommunikationssystem, das eine Medien-Gateway-Steuerung (1) und mindestens ein Stimuli-Telekommunikations-Endgerät (2) enthält, das mit ihr verbunden ist und als Medien-Gateway arbeitet, wobei das mindestens eine Stimuli-Telekommunikations-Endgerät von der Medien-Gateway-Steuerung (1) ferngesteuert wird, und die Kommunikationsverbindung zwischen der Medien-Gateway-Steuerung (1) und dem mindestens einen Stimuli-Telekommunikations-Endgerät (2) auf dem Protokoll ITU-T H.248 / IETF Megaco basiert, wobei das System **dadurch gekennzeichnet ist, dass** eine Gateway-Funktion (3) in der Medien-Gateway-Steuerung (1) bereitgestellt wird oder ihr zugeordnet ist, wobei die Gateway-Funktion (3) angepasst ist, HTTP-Sitzungen auf der Grundlage von Auslöse-Signalen in der Form von H.248-Stimuli von dem mindestens einen Stimuli-Telekommunikations-Endgerät (2), XML-Anzeige-Signale für das mindestens eine Stimuli-Telekommunikations-Endgerät (2) und das Herunterladen von Dateien in das mindestens eine Stimuli-Telekommunikations-Endgerät (2) von einem entfernten Endgerät oder Server (4) zu bearbeiten.

2. Verfahren, eine Kommunikation zwischen einem Stimuli-Telekommunikations-Endgerät, das mit einer Medien-Gateway-Steuerung (1) verbunden ist und von ihr gesteuert wird, auf der einen Seite und einem entfernten Endgerät oder Server (4) auf der anderen Seite über mindestens ein Weitverkehrsnetz aufzubauen, wobei die Kommunikationsverbindung zwischen der Medien-Gateway-Steuerung und dem Stimuli-Telekommunikations-Endgerät auf dem Protokoll ITU-T H.248 / IETF Megaco basiert, wobei das Verfahren **dadurch gekennzeichnet ist, dass** es die Schritte umfasst, eine ferngesteuerte Operation, die direkt oder durch Einwirkung auf das Stimuli-Telekommunikations-Endgerät (2) erzeugt wird, auszuführen, insbesondere das Herunterladen von Dateien in das Stimuli-Telekommunikations-Endgerät (2) aus dem entfernten Endgerät oder dem Server (4) mittels einer Gateway-Funktion (3), die angepasst ist, das Hypertext Transfer Protocol zu unterstützen, wobei die Gateway-Funktion (3) in der Medien-Gateway-Steuerung (1) bereitgestellt wird oder ihr zugeordnet ist, und angepasst ist, HTTP-Sitzungen auf der Grundlage von Auslöse-Signalen in der Form von H.248-Stimuli von dem Stimuli-Telekommunikations-Endgerät (2), XML-Anzeige-Signale für das Stimuli-Telekommunikations-Endgerät (2) und das Herunterladen von Dateien in das Stimuli-Telekommunikations-Endgerät (2) von dem entfernten Endgerät oder Server (4) zu unterstützen.

3. Verfahren gemäß Anspruch 2, **dadurch gekennzeichnet, dass** es auf einem System gemäß Anspruch 1 ausgeführt wird.

## Revendications

1. Système de communication comprenant un contrôleur de passerelle de média (1) et au moins un terminal de télécommunication par stimuli (2) y étant connecté et agissant comme une passerelle de média, dans lequel ledit au moins un terminal de télécommunication par stimuli est contrôlé à distance par ledit contrôleur de passerelle de média (1) et la liaison de communication entre ledit contrôleur de passerelle de média (1) et ledit au moins un terminal de communication par stimuli (2) se base sur le protocole ITU-T H.248 / IETF Megaco, le système étant **caractérisé en ce qu'**une fonction de passerelle (3) est prévue à l'intérieur de, ou associée audit contrôleur de passerelle de média (1), ladite fonction de passerelle (3) étant adaptée pour gérer des sessions HTTP basées sur des signaux de déclenchement sous la forme de stimuli H.248 provenant dudit au moins un terminal de télécommunication par stimuli (2), des signaux d'affichage XML vers ledit au moins un terminal de télécommunication par stimuli (2) et le téléchargement de fichiers dans ledit au moins un terminal de télécommunication par stimuli (2) provenant d'un terminal ou d'un serveur distant (4).

2. Procédé pour établir une communication entre un terminal de télécommunication par stimuli connecté à et contrôlé par un contrôleur de passerelle de média (1) d'une part, et un terminal ou un serveur distant (4) d'autre part, sur au moins un réseau de zone étendue, la liaison de communication entre ledit contrôleur de passerelle de média et ledit terminal de télécommunication par stimuli étant basée sur le protocole ITU-T H.248 / IETF Megaco, le procédé étant **caractérisé en ce qu'**il comprend les étapes d'effectuer une opération distante générée directement par ou agissant sur ledit terminal de télécommunication par stimuli (2), en particulier le téléchargement de fichiers dans ledit terminal de télécommunication par stimuli (2) à partir dudit terminal ou serveur distant (4), au moyen d'une fonction de passerelle (3) adaptée pour supporter le protocole de transfert hypertexte, ladite fonction de passerelle (3) étant prévue à l'intérieur de, ou associée audit contrôleur de passerelle de média (1) et adaptée pour gérer des sessions HTTP sur la base de signaux de déclenchement sous la forme de stimuli H.248 provenant dudit terminal de communication par stimuli (2), des signaux d'affichage XML vers ledit terminal de télécommunication par stimuli (2) et le téléchargement de fichiers dans ledit terminal de télécommunication par stimuli (2) à partir dudit terminal ou serveur distant (4).

3. Procédé selon la revendication 2, **caractérisé en ce qu'**il est réalisé sur un système selon la revendication 1.
